# EUROPEAN PATENT APPLICATION

(11) **EP 3 813 248 A1**
(43) Date of publication of application: **28.04.2021**
(21) Application number: 18925594.6
(22) Date of filing: 02.07.2018
(51) Int. Cl.: H02P 6/16, G01D 5/14

(54) **METHOD AND SYSTEM FOR ACQUIRING INITIAL MECHANICAL ANGLE OF ELECTRIC MOTOR**

(71) Applicant: SZ DJI Technology Co., Ltd., Shenzhen, Guangdong 518057 (CN)
(72) Inventor: LONG, Biao, Shenzhen, Guangdong 518057 (CN); FAN, Qinghe, Shenzhen Guangdong 518057 (CN)
(74) Representative: Goddar, Heinz J.
(86) International application number: PCT/CN2018/094012
(87) International publication number: WO 2020/006659

(57) **Abstract**

A method for obtaining an initial mechanical angle of an electric motor. The method includes determining a mechanical state of the electric motor, determining an initial electrical angle of the electric motor according to the mechanical state, determining the initial mechanical angle of the electric motor according to the initial electrical angle.

## Description

### TECHNICAL FIELD

The present disclosure relates to the field of electric motor control and, more particularly, relates to a method and system for obtaining an initial mechanical angle of an electric motor.

### BACKGROUND

An electric motor usually uses a linear Hall sensor to detect an electrical angle of a motor rotor and obtain a mechanical angle of the electric motor rotor from the electrical angle. For a multi-pole electric motor, a mechanical cycle corresponds to a plurality of electrical cycles. Correspondingly the mechanical angle of the electric motor rotor cannot be determined only from the electrical angle. In motor control of a gimbal, a mechanical limit structure of the gimbal is usually used to determine the mechanical angle cooperatively when the electric motor is powered on. Specifically, after the electric motor is powered on during start up, the gimbal usually rotates forward and backward to hit the limit structure, so as to determine the initial mechanical angle of the gimbal through the known position of the limit structure, and then enters attitude control. However, this method for determining the mechanical angle of the electric motor rotor by hitting the limit structure has the following problems:
1. The starting of the gimbal is slow and the user experience is poor;
2. It is easy to be blocked by obstructions during the process of hitting the limit structure, resulting in start-up failure, and hence the reliability is poor; and
3. The mechanical limit structure has a risk of fatigue damage, increasing the limit angle deviation.

### SUMMARY

In view of the above, the present disclosure provides a method and system for obtaining an initial mechanical angle of an electric motor. The present disclosure does not require the electric motor to rotate and hit a limit structure when it is powered on, and can accurately determine the mechanical angle of a motor rotor, thereby achieving rapid start-up of the electric motor and reducing the loss of the electric motor simultaneously.

One aspect of the present disclosure provides a method for obtaining an initial mechanical angle of an electric motor. The method includes determining a mechanical state of the electric motor, determining an initial electrical angle of the electric motor according to the mechanical state, and determining the initial mechanical angle of the electric motor according to the initial electrical angle.

Another aspect of the present disclosure provides a system for obtaining an initial mechanical angle of an electric motor. The system includes a first sensor configured to determine a mechanical state of the electric motor; controller connected to the first sensor, and configured to obtain an initial electrical angle of the electric motor according to the mechanical state and determine the initial mechanical angle of the electric motor according to the initial electrical angle.

Another aspect of the present disclosure provides an electric motor, including the above system for obtaining the initial mechanical angle of the electric motor.

Another aspect of the present disclosure provides a gimbal, including the above system for obtaining the initial mechanical angle of the electric motor.

The present disclosure has at least following benefits according to the above solutions. In the present disclosure, a magnetic encoder/potentiometer or photoelectric encoder may be provided at the electric motor to determine the mechanical angle or mechanical position range of the electric motor when the electric motor is powered on. Therefore, the electrical cycle of the electric motor may be determined to obtain the unique initial electrical angle of the electric motor, so as to obtain the initial mechanical angle. Compared with limit using rotation and collision in the existing technology, embodiments of the present disclosure can determine the mechanical angle of the electric motor rotor more accurately, realize the rapid startup of the electric motor, and prevent the loss of the electric motor.

### BRIEF DESCRIPTION OF THE DRAWINGS

The accompanying drawings are used to provide a further understanding of the present disclosure and constitute a part of the specification. Together with the following specific embodiments, they are used to explain the present disclosure, but do not constitute a limitation to the present disclosure.
FIG. 1 is a flow chart showing an exemplary method for obtaining an initial mechanical angle of an electric motor consistent with various embodiments of the present disclosure.
FIG. 2 is a flow chart showing sub-processes of S102 consistent with various embodiments of the present disclosure.
FIG. 3 is a flow chart showing sub-processes of S1022 consistent with various embodiments of the present disclosure.
FIG. 4 illustrates an exemplary mapping relationship between an electrical angle and a mechanical angle consistent with various embodiments of the present disclosure.
FIG. 5 illustrates an exemplary mapping relationship between an electrical angle and a mechanical angle after modification consistent with various embodiments of the present disclosure.
FIG. 6 illustrates an exemplary photoelectric code disc consistent with various embodiments of the present disclosure.
FIG. 7 illustrates an exemplary process for discretizing analog voltage signal to digital voltage signal consistent with various embodiments of the present disclosure.
FIG. 8 illustrates an exemplary result of discretizing analog voltage signal to digital voltage signal consistent with various embodiments of the present disclosure.
FIG. 9 illustrates an exemplary determination of the electrical angle EAᵢ calibrated by the mechanical position range and the electrical cycle i consistent with various embodiments of the present disclosure.
FIG. 10 illustrates an exemplary determination of the electrical cycle i after modification consistent with various embodiments of the present disclosure.
FIG. 11 illustrates an exemplary three-axis gimbal consistent with various embodiments of the present disclosure.

### DETAILED DESCRIPTION OF THE EMBODIMENTS

Technical solutions of the present disclosure will be described with reference to the drawings. It will be appreciated that the described embodiments are exemplary but not to limit the scope of the present disclosure. Further, in the following description, descriptions of well-known structures and technologies are omitted to avoid unnecessarily obscuring the concept of the present disclosure.

The terms used here are only for describing specific embodiments, and are not intended to limit the present disclosure. The terms "including"," "comprising"," etc., used herein indicate the existence of the described features, steps, operations and/or components, but do not exclude the existence or addition of one or more other features, steps, operations or components.

All terms (including technical and scientific terms) used herein have the meanings commonly understood by those skilled in the art, unless otherwise defined. It should be noted that the terms used herein should be interpreted as having meanings consistent with the context of this specification, and should not be interpreted in an idealized or overly rigid manner.

In the case of using an expression similar to "at least one of A, B and C, etc."," generally speaking, it should be interpreted according to the meaning of the expression commonly understood by those skilled in the art (for example, "a system including at least one of A, B and C" shall include but is not limited to a system including A alone, a system including B alone, a system including C alone, a system including A and B, a system including A and C, a system including B and C, and/or a system including A, B, C, etc.). In the case of using an expression similar to "at least one of A, B or C"," generally speaking, it should be interpreted according to the meaning of the expression commonly understood by those skilled in the art (for example, "a system including at least one of A, B and C" shall include but is not limited to a system including A alone, a system including B alone, a system including C alone, a system including A and B, a system including A and C, a system including B and C, and/or a system including A, B, C, etc.). Those skilled in the art should also understand that essentially any transitional conjunctions and/or phrases representing two or more optional items, whether in the specification, claims, or drawings, should be understood to include the possibility of one of the items, any one of the items, or two items. For example, the phrase "A or B" should be understood to include the possibilities of "A" or "B"," or "A and B."

The present disclosure provides a method for obtaining an initial mechanical angle of an electric motor. The method may include: determining a mechanical state of the electric motor; determining an initial electrical angle of the electric motor according to the mechanical state; and determining the initial mechanical angle of the electric motor according to the initial electrical angle.

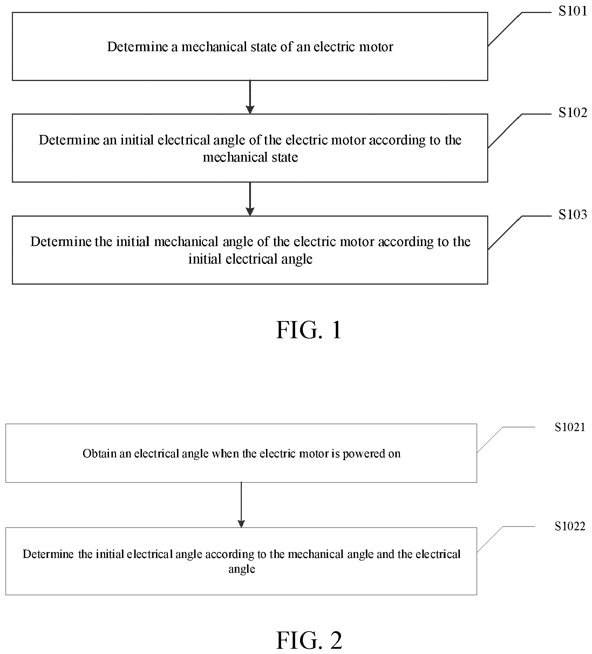

FIG. 1 is a flow chart of an exemplary method for obtaining an initial mechanical angle of an electric motor consistent with embodiments of the present disclosure. As illustrated in FIG. 1, the method includes S101∼S103.

At S101, the mechanical state of the electric motor is determined.

Two methods may be used to obtain the mechanical state of the electric motor: using a magnetic encoding device to determine a mechanical angle of the electric motor when the electric motor is powered on, or using a photoelectric code disc to determine a mechanical position range of the electric motor when the electric motor is powered on. That is, the mechanical state of the electric motor may include the mechanical angle or the mechanical position range when the electric motor is powered on. Two methods may be used to obtain the mechanical state of the electric motor. In one embodiment, the electric motor with the magnetic encoding device may be used to obtain the initial mechanical angle of the electric motor. In another embodiment, the electric motor with the photoelectric code disc may be used to obtain the initial mechanical angle of the electric motor.

It should be noted that in the embodiment of the electric motor with the magnetic encoding device, the mechanical angle obtained by the magnetic encoding device disposed at a side of a shaft of the electric motor may have poor linearity and low accuracy, and linearity calibration may be needed. Therefore, the mechanical angle obtained by the magnetic encoding device may be only used as a standard to determine the electrical cycle of the electric motor, to obtain the initial mechanical angle with high accuracy finally.

At S102, the initial electrical angle of the electric motor is determined according to the mechanical state.

Specifically, an electrical cycle of the electric motor may be determined according to the mechanical state of the electric motor, that is, the mechanical angle or the mechanical position range. Then the electrical cycle may be combined with the electrical angle when the electric motor is powered on or the calibrated electrical angle when the electric motor is in the mechanical position range, to determine the initial electrical angle of the electric motor.

At S103, the initial mechanical angle of the electric motor is determined according to the initial electrical angle.

Assuming a number of pole pairs in the electric motor is N where N≥1, then the initial mechanical angle equals the initial electrical angle/N. Compared with the mechanical angle of the electric motor obtained by the magnetic encoding device when the electric motor is powered on, the initial mechanical angle may be more accurate. Further, in the above two embodiments, the electric motor may not need to rotate to hit limit structures. Rapid startup of the electric motor can be achieved and the loss of the electric motor can also be reduced.

It should be noted that in some embodiments, a potentiometer may be used to replace the magnetic encoder. That is, the mechanical angle when the electric motor is powered on may be measured by the voltage change of the potentiometer disposed on the electric motor, to determine the initial mechanical angle of the electric motor, which is not described in detail here.

The first embodiment of the present disclosure is used to descript the first method of the obtaining method. FIGs. 1-5 will be used to describe the first embodiment.

At S101, the mechanical angle when the electric motor is powered on is determined by the magnetic encoder on the electric motor.

At S102, the initial electrical angle of the electric motor is determined according to the mechanical angle.

Specifically, as illustrated in FIG. 2, S102 includes S1021∼S1022.

At S1021, an electrical angle when the electric motor is powered on is obtained by a Hall sensor on the electric motor.

At S1022, the initial electrical angle is determined according to the mechanical angle and the electrical angle.

In the present embodiment, the number of pole pairs in the electric motor is N, and correspondingly a mechanical cycle of the electric motor may correspond to N electrical cycles. A current electrical cycle of the electric motor may need to be determined to determine the unique initial electrical angle of the electric motor.

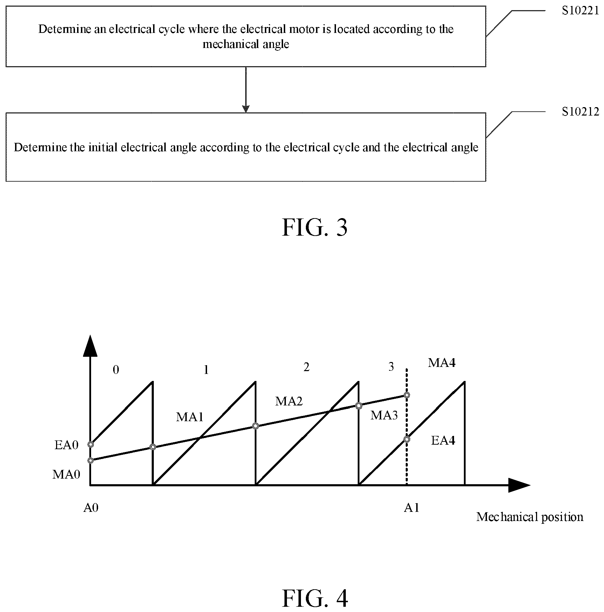

More specifically, as illustrated in FIG. 3, S1023 includes the following.

At S10221, the current electrical cycle where the electric motor is located is determined according to the mechanical angle.

First, in general, the electric motor may have limit positions. A zeroth electrical angle EA₀ when the electric motor is in an initial limit position may be obtained by the Hall sensor, and a zeroth mechanical angle MA₀ may be obtained by the magnetic encoder. Consequently, an N-th electrical angle EA_{N} when the electric motor is in a final limit position may be obtained by the Hall sensor, and an N-th mechanical angle MA_{N} may be obtained by the magnetic encoder.

Further, the magnetic encoder may be used to obtain a first mechanical angle MA₁, a second mechanical angle MA₂, ..., and an (N-1)-th mechanical angle MA_{N-1} corresponding to the zero degree electrical angle of the electric motor in each electrical cycle of the N electrical cycles, to obtain the zeroth mechanical angle to the N-th mechanical angle (MA₀∼MA_{N}).

Consequently, the electrical cycle of the electric motor may be determined according to a relationship between the mechanical angle MA when the electric motor is powered on and MA₀∼MA_{N}.

When the mechanical angle MA satisfies MAᵢ≤MA≤MAᵢ₊₁, the electric motor is determined to be in the electrical cycle i, where 0≤i≤N-1.

As illustrated in FIG. 4, in one embodiment, N is 4 and 0≤i≤3. A mapping relationship between the electrical angle and the mechanical angle may include:
when the electrical angle is MA₀<MA<MA₁, the electric motor is in the electrical cycle 0;
when the electrical angle is MA₁<MA<MA₂, the electric motor is in the electrical cycle 1;
when the electrical angle is MA₂<MA<MA₃, the electric motor is in the electrical cycle 2; and
when the electrical angle is MA₃<MA<MA₄, the electric motor is in the electrical cycle 3.

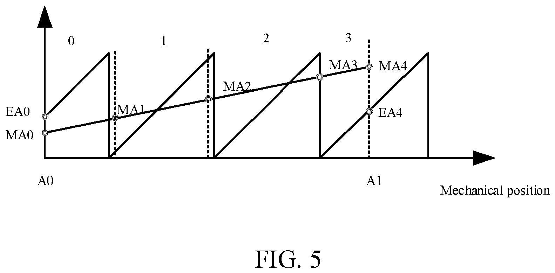

In some embodiments of the present disclosure, because of deviation between real-time data and recorded data in actual application, MA and the recorded MA₁, MA₂, and MA₃ may not be strictly aligned. Judgment may be made at boundary points of the recorded data, as illustrated in FIG. 5.

Correspondingly, to obtain the initial mechanical angle more accurately, following judgment steps may be included to correct the electrical cycles.

Whether the angle difference between the mechanical angle and any one of MA₀∼MA_{N} is in a preset threshold range may be determined.

When the angle difference between the mechanical angle and any one of MA₀∼MA_{N} is in the preset threshold range, if the electrical angle is close to 0°, the electric motor may be determined to be in the electrical cycle i+1, and if the electrical angle close to 360°, the electric motor may be determined to be in the electrical cycle i.

In general, the preset threshold range may be 180°, or any suitable angle, and the value may be adjusted according to the actual needs of the users.

For example, the electrical angle may meet MA₁<MA<MA₂, and the electric motor may be determined to be in the electrical cycle 1 according to the mapping relationship between the electrical angle and the mechanical angle. To make the initial mechanical angle more accurate, after correction in the judgment steps, the electrical angle is close to 0°, and then the electric motor may be determined to be actually in the electrical cycle 2.

At S10222, the initial electrical angle is determined according to the electrical cycle and the electrical angle.

Correspondingly, the corrected initial electrical angle = the electrical angle when the electric motor is powered on + 360°×the corrected electrical cycle.

In the previous example, the initial electrical angle before correction = the electrical angle when the electric motor is powered on + 360°×1, while the corrected initial electrical angle = the electrical angle when the electric motor is powered on + 360°×2.

At S103, the initial mechanical angle of the electric motor is determined according to the corrected initial electrical angle.

Correspondingly, the corrected initial mechanical angle = the initial electrical angle/N.

The second embodiment of the present disclosure is used to illustrate the second method in the present disclosure, and will be described below with reference to FIG. 1, and FIGs. 6-10.

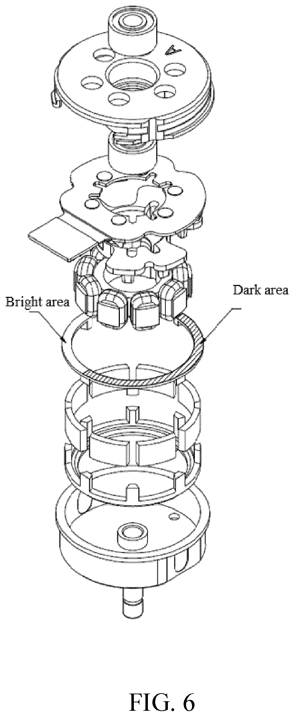

As illustrated in FIG. 6, in the present embodiment, the photoelectric code disc with symmetric black and white parts is disposed below a rotor shell of the electric motor. The photoelectric code disk may include a bright area and a dark area. When the photoelectric code disc is working, light may transmit and incident on the photoelectric code disc which rotates with the rotor. The light passing through the bright area may be received by photosensitive elements after passing through slits. Arrangement of the photosensitive elements may correspond to code tracks one by one, and the photoelectric code disc may output different analog voltage signals. The analog voltage signals may be sampled and discretized into digital voltage signals. The signal output by a photosensitive element corresponding to the bright area may be "1" and the signal output by a photosensitive element corresponding to the dark area may be "0". Therefore, a signal edge (falling edge or rising edge) of a signal transition may be obtained. Further, a range of positions of the electric motor corresponding to the digital voltage signals output by the photoelectric code disc at two sides of the signal edge may be the mechanical position range.

In some other embodiments, the photoelectric code disc may also include a high reflectivity area and a low reflectivity area, and the transmission and receiving modules or photosensitive elements of photoelectric sensors may be provided at the same side of the photoelectric code disc. When the photoelectric code disc is working, the light incident on the high reflectivity area and the low reflectivity area may cause the photosensitive elements to output different analog voltage signals. The processing method is similar to the foregoing embodiments and will not be repeated here.

In some embodiments, the rotation range of the electric motor may be limited. For example, an external structure driven by the electric motor may have mechanical limits, which causes the electric motor to only rotate within a limited range instead of 360°. Within this rotation range, a boundary between the light and dark areas of the photoelectric code disc may be included correspondingly. In this way, it can be determined that there is only one edge signal output by the photoelectric code disc within the rotation range of the electric motor, such that the mechanical position of the electric motor when the edge signal appears is a unique position determined within the rotatable range.

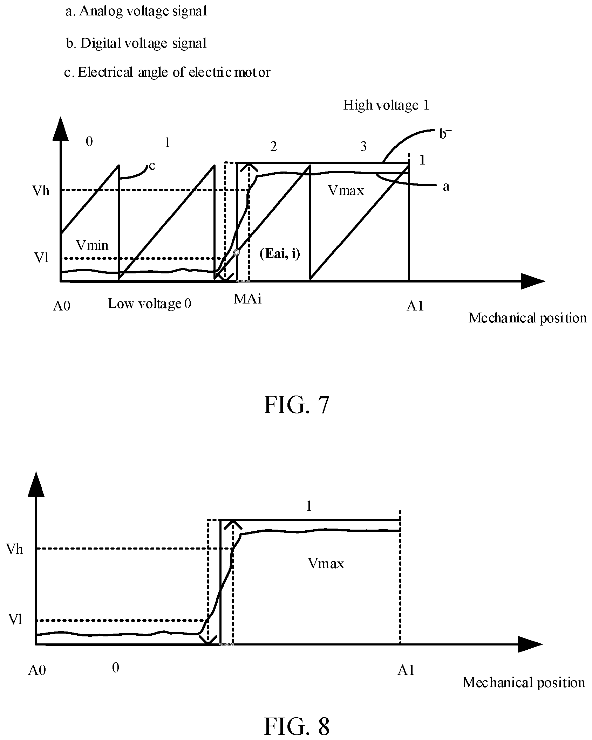

Specifically, with reference to FIGs. 7-8, discretizing the analog voltage signals to the digital voltage signals includes the following.

Obtaining a maximum voltage Vₘₐₓ and a minimum voltage Vₘᵢₙ in the analog voltage signals;
Determining hysteresis interval [Vₘₐₓ - (Vₘₐₓ-Vₘᵢₙ)/4, Vₘᵢₙ + (Vₘₐₓ-Vₘᵢₙ)/4] according to Vₘₐₓ and Vₘᵢₙ; and
Determining the voltage higher than the hysteresis interval (the voltage higher than Vₘᵢₙ + (Vₘₐₓ-Vₘᵢₙ)/4) as a high voltage 1 and the voltage lower than the hysteresis interval (the voltage lower than Vₘₐₓ - (Vₘₐₓ-Vₘᵢₙ)/4) as a low voltage 0, to discretize the analog voltage signals to the digital voltage signals.

As illustrated in FIG. 1, the mechanical position range when the electric motor is powered on is determined at S101.

Specifically, S101 may include S1011 and S1022.

At S1011, after the electric motor is powered on, the electric motor is controlled to rotate toward a direction. The direction may be clockwise or counterclockwise.

In some embodiments, when the signal edge of the digital voltage signal is a rising edge, if the digital voltage signal when the electric motor is powered on is 0, the electric motor may rotate clockwise, and if the digital voltage signal when the electric motor is powered on is 1, the electric motor may rotate counterclockwise. When the signal edge of the digital voltage signal is a falling edge, if the digital voltage signal when the electric motor is powered on is 0, the electric motor may rotate counterclockwise, if the digital voltage signal when the electric motor is powered on is 1, the electric motor may rotate clockwise. It is understandable that the rotation direction of the electric motor here is related to the black and white boundary of the photoelectric code disc and the rotation range of the electric motor. In other embodiments, the electric motor can rotate in the opposite direction to the previous embodiment under the same circumstances.

At S1012, when the occurrence of the signal edge is detected, it is determined that the electric motor is in the mechanical position range.

After the mechanical position range when the electric motor is powered on is determined, S102 is performed to determine the initial electrical range of the electric motor according to the mechanical position range.

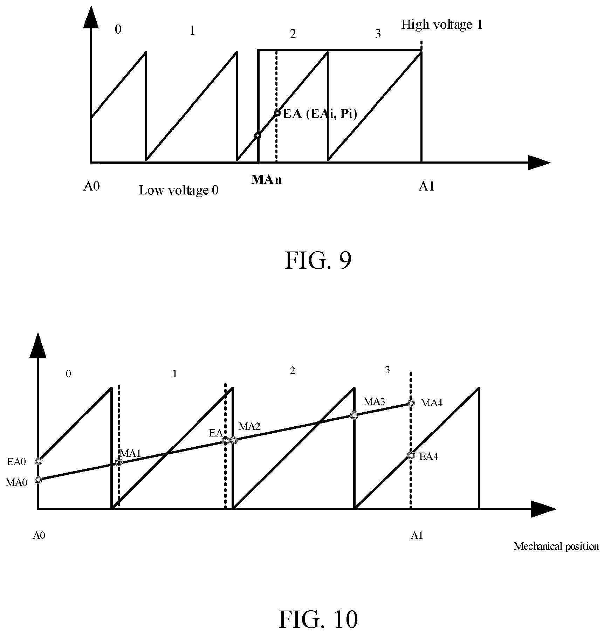

As illustrated in FIG. 9, according to the electrical angle EAᵢ obtained by the Hall sensor on the electric motor and calibrated by the mechanical position range, and the electrical cycle i, the initial electrical angle of the electric motor may be determined, where 0≤i≤N-1.

In some embodiments of the present disclosure, as shown in FIG. 10, due to the deviation between real-time data and recorded data in practical applications, when the electric motor rotates to the mechanical position range, the actual electrical angle EA measured by the Hall sensor may not be strictly aligned with EAᵢ. Correspondingly, the impact of deviation of real-time data and recorded data should be considered. Therefore, it may be needed to eliminate the drift of the electrical cycles and correct the electrical cycles. If |EA-EAᵢ|≤a, the electric motor is located in the electrical cycle i, where a is a predetermined threshold angle; and if |EA-EAᵢ|> a, the electric motor is in electrical cycle i-1. It should be noted that when the electrical cycle is 0-1, that is, -1, it means that the current electrical cycle is 3.

In various embodiments, a may be 180° or another suitable value, and can be adjusted according to actual needs.

According to the corrected electrical cycle and electrical angle EAᵢ, a more accurate corrected initial electrical angle may be obtained, where the corrected initial electrical angle = electrical angle EAᵢ calibrated by the mechanical position range + 360°×corrected electrical cycle. For example, if the electrical angle EAᵢ obtained by the Hall sensor and calibrated by the mechanical position range is 30°, the uncorrected initial electrical angle=EAᵢ+360°×3=1110°. However, in fact, comparing EAᵢ with the actual electrical angle EA=220°, it may be obtained that |EA-EA_{¡}|=190°>180°, therefore the electric motor should actually be in electrical cycle 2 and the initial electrical angle=EAᵢ+360°×2=750°. It can be seen that if no correction is made, the error of the initial electrical angle is relatively large.

At S103, the initial mechanical angle of the electric motor may be determined according to the corrected initial electrical angle.

Similar to the first method, the initial mechanical angle = the corrected initial electrical angle/N.

According to the previous two embodiments, in the method for obtaining the initial mechanical angle in the present disclosure, the electrical cycle of the electric motor may be determined according to the mechanical state of the electric motor (that is, the mechanical angle when the electric motor is powered on or the mechanical position range when the electric motor is powered on). Correspondingly, the unique initial electrical angle of the electric motor may be obtained and the unique initial mechanical angle of the electric motor may be determined. Further, the electrical cycle may be corrected to obtain a more accurate initial mechanical angle.

The present disclosure also provides a system for obtaining an initial mechanical angle of an electric motor. The system may include: a first sensor configured to determine the mechanical state of the electric motor, and a controller connected to the first sensor and configured to obtain an initial electrical angle of the electric motor according to the mechanical state and determine the initial mechanical angle according to the initial electrical angle.

When a number of pole pairs in the electric motor is N, the initial mechanical angle = the initial electrical angle/N.

In general, the electrical angle when the electric motor is powered on may be obtained using a second sensor (such as a Hall sensor) connected to the controller.

According to different first sensors, the mechanical state may be the mechanical angle of the electric motor when it is powered on or the mechanical position range when the electric motor is powered on. Therefore, the specific implementation of the obtaining system can be divided into two solutions. The first sensor in the first solution can be a magnetic encoder or a potentiometer to determine the mechanical angle of the electric motor when it is powered on. In the second solution, the first sensor can be a photoelectric code disc to determine the mechanical position range when the electric motor is powered on.

The third embodiment of the present disclosure illustrates the first solution of the obtaining system, and will be described with reference to FIGs. 4 and 5.

In this embodiment, the controller may determine the initial mechanical angle of the electric motor according to the mechanical angle when the electric motor is powered on obtained by the first sensor and the initial electrical angle of the electric motor when the electric motor is powered on obtained by the second sensor. Among them, the first sensor may be a magnetic encoder or a potentiometer. The following will take a magnetic encoder as an example for description. For the specific implementation of the potentiometer, the change in the voltage of the potentiometer set on the electric motor may be measured to obtain the mechanical angle when the electric motor is powered on and determine the initial electrical angle of the electric motor. The specific implementations of these two are similar and will not be repeated here.

Further, the controller may determine the electrical cycle of the electric motor and then determine the initial electrical angle of the electric motor according to the electrical cycle and the electrical angle.

In a process for the controller to determine the electrical cycle, the magnetic encoder may be configured to obtain a zeroth mechanical angle MA₀ when the electric motor is in an initial limit position and an N-th mechanical angle MA_{N} when the electric motor is in a final limit position. The second sensor (such as a Hall sensor) may be configured to obtain a zeroth electrical angle EA₀ when the electric motor is in an initial limit position and an N-th electrical angle EA_{N} when the electric motor is in a final limit position. Further, the magnetic encoder may be used to obtain a first mechanical angle MA₁, a second mechanical angle MA₂, ..., and an (N-1)-th mechanical angle MA_{N-1} corresponding to the electrical angle of the electric motor which is zero in each electrical cycle of the N electrical cycles, to obtain the zeroth mechanical angle to the N-th mechanical angle (MA₀∼MA_{N}).

Final, the controller may be configured to determine that the electric motor is in the electrical cycle i with 0≤i≤N-1.

As illustrated in FIG. 4, in one embodiment, N is 4 and 0≤i≤3. A mapping relationship between the electrical angle and the mechanical angle may include:
when the electrical angle is MA₀<MA<MA₁, the electric motor is in the electrical cycle 0;
when the electrical angle is MA₁<MA<MA₂, the electric motor is in the electrical cycle 1;
when the electrical angle is MA₂<MA<MA₃, the electric motor is in the electrical cycle 2; and
when the electrical angle is MA₃<MA<MA₄, the electric motor is in the electrical cycle 3.

In some embodiments of the present disclosure, because of deviation between real-time data and recorded data in actual application, MA and the recorded MA₁, MA₂, and MA₃ may not be strictly aligned. Judgment may be made at boundary points of the recorded data, as illustrated in FIG. 5.

Correspondingly, to obtain the initial mechanical angle more accurately, following judgment steps may be included to correct the electrical cycles.

Whether the angle difference between the mechanical angle and any one of MA₀∼MA_{N} is in a preset threshold range may be determined.

When the angle difference between the mechanical angle and any one of MA₀∼MA_{N} is in the preset threshold range, if the electrical angle is close to 0°, the electric motor may be determined to be in the electrical cycle i+1, and if the electrical angle is close to 360°, the electric motor may be determined to be in the electrical cycle i.

In general, the preset threshold range may be 180°, or any suitable angle, and the value may be adjusted according to the actual needs of the users.

For example, the electrical angle may meet MA₁<MA<MA₂, and the electric motor may be determined to be in the electrical cycle 1 according to the mapping relationship between the electrical angle and the mechanical angle. To make the initial mechanical angle more accurate, after correction in the judgment steps, the electrical angle is close to 0°, and then the electric motor may be determined to be actually in the electrical cycle 2.

After the corrected electrical cycle is obtained, the initial electrical angle = the electrical angle when the electric motor is powered on + 360°×the corrected electrical cycle.

In the previous example, the initial electrical angle before correction= the electrical angle when the electric motor is powered on + 360°×1, while the corrected initial electrical angle the electrical angle when the electric motor is powered on + 360°×2.

Correspondingly, the corrected initial mechanical angle = the initial electrical angle/N.

The fourth embodiment of the present disclosure is used to illustrate the second solution of the obtaining system in the present disclosure, and will be described below with reference to FIG. 1, and FIGs. 6-10.

In the present disclosure, the first sensor may be configured to output the analog voltage signals of the electric motor, and the controller may obtain the analog voltage signals from the first sensor, convert the analog voltage signals to the digital voltage signals, and determine the position range corresponding to the signal edge of the digital voltage signals as the mechanical position range.

As illustrated in FIG. 6, in the present disclosure, the first sensor is a photoelectric code disc. The photoelectric code disc with symmetric black and white parts is disposed below a rotor shell of the electric motor. The photoelectric code disk may include a bright area and a dark area.

Therefore, the photoelectric code disc may output different analog voltage signals. The controller may sample the analog voltage signals and discretize the analog voltage signals to the digital voltage signals. Therefore, a signal edge (falling edge or rising edge) of a signal transition may be obtained. Further, a range of positions of the electric motor corresponding to the digital voltage signals output by the photoelectric code disc at two sides of the signal edge may be calibrated as the mechanical position range.

Specifically, with reference to FIGs. 7-8, discretizing the analog voltage signals to the digital voltage signals by the controller includes the following.

Obtaining a maximum voltage Vₘₐₓ and a minimum voltage Vₘᵢₙ in the analog voltage signals;
Determining hysteresis interval [Vₘₐₓ - (Vₘₐₓ-Vₘᵢₙ)/4, Vₘᵢₙ + (Vₘₐₓ-Vₘᵢₙ)/4] according to Vₘₐₓ and Vₘᵢₙ, and
Determining the voltage higher than the hysteresis interval (the voltage higher than Vₘᵢₙ + (Vₘₐₓ-Vₘᵢₙ)/4) as a high voltage 1 and the voltage lower than the hysteresis interval (the voltage lower than Vₘₐₓ - (Vₘₐₓ-Vₘᵢₙ)/4) as a low voltage 0, to discretize the analog voltage signals to the digital voltage signals.

After determining the mechanical position range, the controller may control the electric motor to rotate toward a direction, until the controller detects the occurrence of the signal edge and determines that the electric motor is in the mechanical position range. The direction may be clockwise or counterclockwise.

In some embodiments, when the signal edge of the digital voltage signal is a rising edge, if the digital voltage signal when the electric motor is powered on is 0, the electric motor may rotate clockwise, and if the digital voltage signal when the electric motor is powered on is 1, the electric motor may rotate counterclockwise. When the signal edge of the digital voltage signal is a falling edge, if the digital voltage signal when the electric motor is powered on is 0, the electric motor may rotate counterclockwise, if the digital voltage signal when the electric motor is powered on is 1, the electric motor may rotate clockwise. It is understandable that the rotation direction of the electric motor here is related to the black and white boundary of the photoelectric code disc and the rotation range of the electric motor. In other embodiments, the electric motor can rotate in the opposite direction to the previous embodiment under the same circumstances.

As illustrated in FIG. 9, when the electric motor is in the mechanical position range, according to the electrical angle EAᵢ obtained by the Hall sensor on the electric motor and calibrated by the mechanical position range, and the electrical cycle i, the controller determines the initial electrical angle of the electric motor = EAᵢ+360°×i.

In some embodiments of the present disclosure, as shown in FIG. 10, due to the deviation between real-time data and recorded data in practical applications, when the electric motor rotates to the mechanical position range, the actual electrical angle EA measured by the Hall sensor may not be strictly aligned with EAᵢ. Correspondingly, the impact of deviation of real-time data and recorded data should be considered. Therefore, it may be needed to eliminate the drift of the electrical cycles and correct the electrical cycles. If |EA-EAᵢ|≤a, the electric motor is located in the electrical cycle i, where a is a predetermined threshold angle; and if |EA-EAᵢ|>a, the electric motor is in electrical cycle i-1. It should be noted that when the electrical cycle is 0-1, that is, -1, it means that the current electrical cycle is 3.

In various embodiments, a may be 180° or another suitable value, and can be adjusted according to actual needs.

According to the corrected electrical cycle and electrical angle EAᵢ, a more accurate corrected initial electrical angle may be obtained, where the corrected initial electrical angle = electrical angle EAᵢ calibrated by the mechanical position range + 360°×corrected electrical cycle. For example, if the electrical angle EAᵢ obtained by the Hall sensor and calibrated by the mechanical position range is 30°, the uncorrected initial electrical angle=EAᵢ+360°×3=1110°. However, in fact, comparing EAᵢ with the actual electrical angle EA=220°, it may be obtained that |EA-EAᵢ|=190°>180°, therefore the electric motor should actually be in electrical cycle 2 and the initial electrical angle= EAᵢ +360°×2=750°. It can be seen that if no correction is made, the error of the initial electrical angle is relatively large.

Correspondingly, the initial mechanical angle = the corrected initial electrical angle/N.

According to the previous two embodiments, in the present disclosure, the electrical cycle of the electric motor may be determined according to the mechanical state of the electric motor (that is, the mechanical angle when the electric motor is powered on or the mechanical position range when the electric motor is powered on). Correspondingly, the unique initial electrical angle of the electric motor may be obtained and the unique initial mechanical angle of the electric motor may be determined. Further, the electrical cycle may be corrected to obtain a more accurate initial mechanical angle.

The present disclosure also provides a gimbal. The gimbal may include an obtaining system for obtaining an initial mechanical angle of an electric motor provided by previous embodiments of the present disclosure. The system may include: a first sensor configured to determine the mechanical state of the electric motor, and a controller connected to the first sensor and configured to obtain an initial electrical angle of the electric motor according to the mechanical state and determine the initial mechanical angle according to the initial electrical angle.

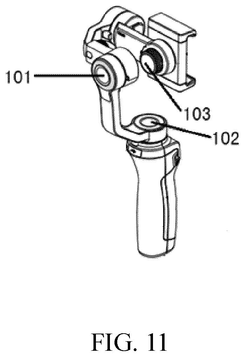

In one embodiment, the gimbal may be a three-axis gimbal. In some other embodiments, the gimbal may be another type of gimbal, and the present disclosure has no limits on this. In one embodiment as illustrated in FIG. 11, the gimbal is a three-axis gimbal. The roll axis motor 101, the yaw axis motor 102, and the pitch axis motor 103 are all equipped with the above-described obtaining system for obtaining the initial mechanical angle of the electric motor, such that a magnetic encoder/potentiometer or photoelectric encoder can be provided at the electric motor to determine the mechanical angle or mechanical position range of the electric motor when it is powered on. Therefore, the electrical cycle of the electric motor may be determined to obtain the unique initial electrical angle of the electric motor and the initial mechanical angle. Compared with limit using rotation and collision in the existing technology, the three-axis gimbal can determine the mechanical angle of the electric motor rotor more accurately, realize the rapid startup of the electric motor, and prevent the loss of the electric motor.

Those skilled in the art can clearly understand that for the convenience and brevity of the description, description is made use the division of the above functional modules as an example. In practical applications, the above functions can be realized by different functional modules as needed, that is, the internal structure of the device is divided into different functional modules to complete all or part of the functions described above. For the specific working process of the device described above, reference can be made to the corresponding process in the foregoing method embodiments, which will not be repeated here..

Finally, it should be noted that the above embodiments are only used to illustrate the technical solutions of the present disclosure, not to limit them. Although the present disclosure has been described in detail with reference to the foregoing embodiments, those of ordinary skill in the art should understand that the technical solutions described in the foregoing embodiments can still be modified, or some or all of the technical features can be equivalently replaced. In the case of no conflict, the features in the embodiments of the present disclosure can be combined arbitrarily; and these modifications or replacements do not cause the essence of the corresponding technical solutions to deviate from the scope of the technical solutions of the embodiments of the present disclosure.

## Claims

1. A method for obtaining an initial mechanical angle of an electric motor, comprising:
determining a mechanical state of the electric motor;
determining an initial electrical angle of the electric motor according to the mechanical state;
determining the initial mechanical angle of the electric motor according to the initial electrical angle.

2. The method according to claim 1, wherein determining the initial mechanical angle of the electric motor includes:
obtaining the initial mechanical angle according to the initial electrical angle and a number N of pole pairs of the electric motor, wherein N≥1.

3. The method according to claim 1 or 2, wherein determining the mechanical state of the electric motor includes:
determining a mechanical angle when the electric motor is powered on.

4. The method according to claim 3, further comprising:
obtaining an electrical angle when the electric motor is powered on;
determining the initial electrical angle according to the mechanical angle and the electrical angle.

5. The method according to claim 4, wherein determining the initial electrical angle of the electric motor further includes:
determining an electrical cycle where the electric motor is located according to the mechanical angle; and
determining the initial electrical angle according to the electrical cycle and the electrical angle.

6. The method according to claim 5, wherein determining the electrical cycle where the electric motor is located includes:
obtaining a zeroth electrical angle EA₀ and a zeroth mechanical angle MA₀ when the electric motor is in an initial limit position, and an N-th electrical angle EA_{N} and an N-th mechanical angle MA_{N} when the electric motor is in a final limit position;
determining a first mechanical angle MA₁ to an (N-1)-th mechanical angle MA_{N-1} when the electrical angle in each electrical cycle of the electrical cycles is 0;
according to the mechanical angle and MA₀∼MA_{N}, obtaining the electrical cycle i where the electric motor is located, wherein 0≤i≤N-1.

7. The method according to claim 6, wherein determining the electrical cycle where the electric motor is located further includes:
when a difference between the mechanical angle and any one of MA₀∼MA_{N} is in a preset threshold range,
in response to the electrical angle being close to 0°, determining that the electric motor is in the electrical cycle i+1;
in response to the electrical angle being close to 360°, determining that the electric motor is in the electrical cycle i.

8. The method according to claim 6, further comprising:
obtaining EA₀, EA₁, and the electrical angle using a Hall sensor.

9. The method according to claim 6, further comprising:
obtaining the mechanical angle and MA₀∼MA_{N} using a magnetic encoder.

10. The method according to claim 6, further comprising:
obtaining the mechanical angle and MA₀∼MA_{N} using a potentiometer.

11. The method according to claim 1 or 2, wherein determining the mechanical state of the electric motor includes:
determining a mechanical position range when the electric motor is powered on.

12. The method according to claim 11, further comprising:
obtaining an analog voltage signal of a photoelectric code disc;
converting the analog voltage signal to a digital voltage signal;
determining a position range corresponding to signal edges of the digital voltage signal as the mechanical position range.

13. The method according to claim 12, wherein the photoelectric code disc includes a bright area and a dark area.

14. The method according to claim 12, wherein determining the mechanical position range when the electric motor is powered on includes controlling the electric motor to rotate toward a direction when the electric motor is powered on and determining the mechanical position range of the electric motor when the occurrence of the signal edge is detected.

15. The method according to claim 12, wherein determining the initial electrical angle of the electric motor includes:
determining the electrical angle EAᵢ calibrated by the mechanical position range, and the electrical cycle i, wherein 0≤i≤N-1;
determining the initial electrical angle according to the electrical angle EAᵢ and the electrical cycle i.

16. The method according to claim 15, wherein determining the initial electrical angle of the electric motor further includes:
measuring the actual electrical angle EA when the electric motor rotates to the mechanical range;
in response to |EA-EAᵢ|≤a, determining the electric motor to be in the electrical cycle i wherein a is a preset threshold angle;
in response to |EA-EA_{¡}|>a, determining the electric motor to be in the electrical cycle i-1.

17. The method according to claim 12, further comprising:
obtaining a maximum voltage Vmax and a minimum voltage Vmin in the analog voltage signal;
determining a hysteresis interval according to Vmax and Vmin; and
denoting voltage larger than the hysteresis interval as high voltage 1 and voltage lower than the hysteresis interval as low voltage 0.

18. The method according to claim 16, further comprising:
using a Hall sensor to measure the actual electrical angle and the electrical angle EAᵢ calibrated by the mechanical position range.

19. A system for obtaining an initial mechanical angle of an electric motor, comprising:
a first sensor configured to determine a mechanical state of the electric motor;
a controller connected to the first sensor, configured to determine an initial electrical angle of the electric motor according to the mechanical state and determine the initial mechanical angle of the electric motor according to the initial electrical angle.

20. The system according to claim 19, wherein:
the initial mechanical angle is determined according to the initial electrical angle and a number N of pole pairs of the electric motor, wherein N≥1.

21. The system according to claim 19 or 21, further comprising a second sensor connected to the controller, configured to obtain an electrical angle when the electric motor is powered on.

22. The system according to claim 21, wherein the mechanical state of the electric motor includes a mechanical angle when the electric motor is powered on.

23. The system according to claim 22, wherein the controller is configured to determine the initial electrical angle according to the mechanical angle and the electrical angle.

24. The system according to claim 23, wherein the controller is further configured to:
determine an electrical cycle where the electric motor is located according to the mechanical angle;
determine the initial electrical angle according to the electrical cycle and the electrical angle.

25. The system according to claim 24, wherein:
the first sensor is configured to obtain a zeroth mechanical angle MA₀ when the electric motor is in an initial limit position, and an N-th mechanical angle MA_{N} when the electric motor is in a final limit position;
the second sensor is configured to obtain a zeroth electrical angle EA₀ when the electric motor is in an initial limit position, and an N-th electrical angle EA_{N} when the electric motor is in a final limit position;
the first sensor is further configured to obtain a first mechanical angle MA₁ to an (N-1)-the mechanical angle MA_{N-1} when the electrical angle in each electrical cycle of N electrical cycles is 0;
the controller is further configured to obtain the electrical cycle i where the electric motor is located, according to the mechanical angle and MA₀∼MA_{N}, wherein 0≤i≤N-1.

26. The system according to claim 25, wherein the controller is further configured to, when a difference between the mechanical angle and any one of MA₀∼MA_{N} is in a preset threshold range:
in response to the electrical angle being close to 0°, determine that the electric motor is in the electrical cycle i+1;
in response to the electrical angle being close to 360°, determine that the electric motor is in the electrical cycle i.

27. The system according to claim 25, wherein the second sensor is a Hall sensor for obtaining EA₀, EA₁, and the electrical angle.

28. The system according to claim 25, wherein the first sensor is a magnetic encoder for obtaining the mechanical angle and MA₀∼MA_{N}.

29. The system according to claim 25, wherein the first sensor is a potentiometer for obtaining the mechanical angle and MA₀∼MA_{N}.

30. The system according to claim 21, wherein the mechanical state of the electric motor includes a mechanical position range when the electric motor is powered on.

31. The system according to claim 30, wherein:
the first sensor is configured to output analog voltage signal;
the controller is configured to: obtain an analog voltage signal from the first sensor; convert the analog voltage signal to a digital voltage signal; determine a position range corresponding to signal edges of the digital voltage signal as the mechanical position range; control the electric motor to rotate toward a direction when the electric motor is powered on; and determine the mechanical position range of the electric motor when the occurrence of the signal edge is detected;
the second sensor is configured to determine the electrical angle EAᵢ calibrated by the mechanical position range, and the electrical cycle i, wherein 0≤i≤N-1;
the controller is further configured to determine the initial electrical angle according to the electrical angle EAᵢ and the electrical cycle i.

32. The system according to claim 31, wherein the first sensor includes a bright area and a dark area.

33. The system according to claim 32, wherein:
the second sensor is configured to measure the actual electrical angle EA when the electric motor rotates to the mechanical position range; and
the controller is further configured to: in response to |EA-EAᵢ|≤a, determine the electric motor to be in the electrical cycle i wherein a is a preset threshold angle; in response to |EA-EAᵢ|>a, determine the electric motor to be in the electrical cycle i-1.

34. The system according to claim 33, wherein the controller is further configured to:
obtain a maximum voltage Vmax and a minimum voltage Vmin in the analog voltage signal;
determine a hysteresis interval according to Vmax and Vmin;
denote voltage larger than the hysteresis interval as high voltage 1 and voltage lower than the hysteresis interval as low voltage 0.

35. The system according to claim 30, wherein the first sensor is a photoelectric code disc.

36. The system according to claim 30, wherein the second sensor is a Hall sensor.

37. An electric motor, comprising the system for obtaining the initial mechanical angle of the electric motor according to any one of claims 19 to 36.

38. A gimbal, comprising the system for obtaining the initial mechanical angle of the electric motor according to any one of claims 19 to 36.
